# EUROPEAN PATENT APPLICATION

(11) **EP 4 797 122 A1**
(43) Date of publication of application: **26.08.2026**
(21) Application number: 25214938.0
(22) Date of filing: 11.11.2025
(51) Int. Cl.: G06F 16/435, H04L 67/63

(54) **SYSTEM AND METHOD FOR OPTIMIZING CONTENT DELIVERY**

(30) Priority: 20.02.2025 US 202519059160
(71) Applicant: Lemon Inc., Grand Cayman, KY1-1205 (KY)
(72) Inventor: ZHANG, Qi, Beijing, 100028 (CN); PAN, Haobin, Los Angeles, 90066 (US)
(74) Representative: Marks & Clerk LLP

(57) **Abstract**

A method, device and storage medium for content delivery are provided. In the method, a request to deliver a target content to a target object is received. For a content delivery strategy of a plurality of content delivery strategies, at least one group of observed samples are determined based on target features of the target content and the target object, an observed sample comprising reference features of a reference content and a reference object, an indication of whether the content delivery strategy is applied to deliver the reference content and an object response. An effect metric is determined for the content delivery strategy based on the at least one group of observed samples. A target content delivery strategy for delivering the target content to the target object is selected from the plurality of content delivery strategies based on respective effect metrics for the plurality of content delivery strategies.

## Description

### FIELD

The present disclosure generally relates to computer technologies, and more specifically, to a method, device and computer readable storage medium for content delivery.

### BACKGROUND

In the field of digital contents (such as videos, images, audios, advertisements, etc.), optimizing styles of the contents is crucial for improving the effectiveness of the digital contents and user experience. The selection of styles of the digital contents may involve a selection of styles for the digital contents, a selection of timing for presenting the styles of the digital contents and a selection of a landing page for the digital contents.

### SUMMARY

In a first aspect of the present disclosure, there is provided a method for content delivery. The method comprises: receiving a request to deliver a target content to a target object; for a content delivery strategy of a plurality of content delivery strategies, determining at least one group of observed samples based on target features of the target content and the target object, an observed sample comprising reference features of a reference content and a reference object, an indication of whether the content delivery strategy is applied to deliver the reference content to the reference object and an object response of the reference object to the reference content; determining an effect metric for the content delivery strategy based on the at least one group of observed samples, the effect metric indicating an impact degree of the content delivery strategy to object responses; and select, from the plurality of content delivery strategies, a target content delivery strategy for delivering the target content to the target object based on respective effect metrics determined for the plurality of content delivery strategies.

In a second aspect of the present disclosure, there is provided an electronic device. The electronic device comprises: at least one processor; and at least one memory coupled to the at least one processor and storing instructions executable by the at least one processor, the instructions, upon execution by the at least one processor, causing the electronic device to perform acts comprising: receiving a request to deliver a target content to a target object; for a content delivery strategy of a plurality of content delivery strategies, determining at least one group of observed samples based on target features of the target content and the target object, an observed sample comprising reference features of a reference content and a reference object, an indication of whether the content delivery strategy is applied to deliver the reference content to the reference object and an object response of the reference object to the reference content; determining an effect metric for the content delivery strategy based on the at least one group of observed samples, the effect metric indicating an impact degree of the content delivery strategy to object responses; and select, from the plurality of content delivery strategies, a target content delivery strategy for delivering the target content to the target object based on respective effect metrics determined for the plurality of content delivery strategies.

In a third aspect of the present disclosure, a computer-readable storage medium is provided. The computer-readable storage medium stores computer executable instructions which, when executed by an electronic device, causes the electronic device perform acts comprising: receiving a request to deliver a target content to a target object; for a content delivery strategy of a plurality of content delivery strategies, determining at least one group of observed samples based on target features of the target content and the target object, an observed sample comprising reference features of a reference content and a reference object, an indication of whether the content delivery strategy is applied to deliver the reference content to the reference object and an object response of the reference object to the reference content; determining an effect metric for the content delivery strategy based on the at least one group of observed samples, the effect metric indicating an impact degree of the content delivery strategy to object responses; and select, from the plurality of content delivery strategies, a target content delivery strategy for delivering the target content to the target object based on respective effect metrics determined for the plurality of content delivery strategies.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

### BRIEF DESCRIPTION OF THE DRAWINGS

The above and other features, advantages and aspects of the embodiments of the present disclosure will become more apparent in combination with the accompanying drawings and with reference to the following detailed description. In the drawings, the same or similar reference symbols refer to the same or similar elements, where:
FIG. 1 illustrates a schematic diagram of an example environment in which embodiments of the present disclosure may be implemented;
FIG. 2 illustrates a schematic diagram of an example process for content delivery in accordance with some embodiments of the present disclosure;
FIG. 3 illustrates a flowchart of a process for content delivery in accordance with some embodiments of the present disclosure;
FIG. 4 shows a block diagram of an apparatus for content delivery in accordance with some embodiments of the present disclosure; and
FIG. 5 illustrates a block diagram of an electronic device in which one or more embodiments of the present disclosure can be implemented.

### DETAILED DESCRIPTION

The embodiments of the present disclosure will be described in more detail below with reference to the accompanying drawings. Although some embodiments of the present disclosure are shown in the drawings, it would be appreciated that the present disclosure may be implemented in various forms and should not be interpreted as limited to the embodiments described herein. On the contrary, these embodiments are provided for a more thorough and complete understanding of the present disclosure. It would be appreciated that the drawings and embodiments of the present disclosure are only for the purpose of illustration and are not intended to limit the scope of protection of the present disclosure.

In the description of the embodiments of the present disclosure, the term "including" and similar terms would be appreciated as open inclusion, that is, "including but not limited to". The term "based on" would be appreciated as "at least partially based on". The term "one embodiment" or "the embodiment" would be appreciated as "at least one embodiment". The term "some embodiments" would be appreciated as "at least some embodiments". Other explicit and implicit definitions may also be included below. As used herein, the term "model" can represent the matching degree between various data. For example, the above matching degree can be obtained based on various technical solutions currently available and/or to be developed in the future.

It will be appreciated that the data involved in this technical proposal (including but not limited to the data itself, data acquisition or use) shall comply with the requirements of corresponding laws, regulations and relevant provisions.

It will be appreciated that before using the technical solution disclosed in each embodiment of the present disclosure, users should be informed of the type, the scope of use, the use scenario, etc. of the personal information involved in the present disclosure in an appropriate manner in accordance with relevant laws and regulations, and the user's authorization should be obtained.

For example, in response to receiving an active request from a user, a prompt message is sent to the user to explicitly prompt the user that the operation requested operation by the user will need to obtain and use the user's personal information. Thus, users may select whether to provide personal information to the software or the hardware such as an electronic device, an application, a server or a storage medium that perform the operation of the technical solution of the present disclosure according to the prompt information.

As an optional but non-restrictive implementation, in response to receiving the user's active request, the method of sending prompt information to the user may be, for example, a pop-up window in which prompt information may be presented in text. In addition, pop-up windows may also contain selection controls for users to choose "agree" or "disagree" to provide personal information to electronic devices.

It will be appreciated that the above notification and acquisition of user authorization process are only schematic and do not limit the implementations of the present disclosure. Other methods that meet relevant laws and regulations may also be applied to the implementation of the present disclosure.

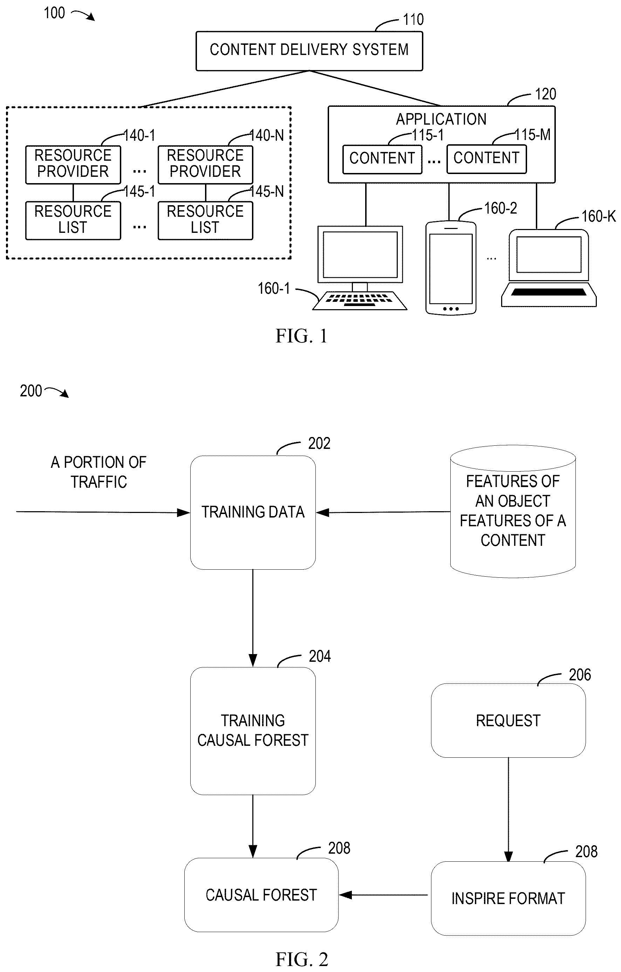

FIG. 1 illustrates a schematic diagram of an example environment 100 in which embodiments of the present disclosure may be applied. In FIG. 1, one or more resource providers 140-1, ..., 140-N may request a content delivery system 110 to manage contents 115-1, ..., 115-M that are to be displayed in an application 120. N and M represent positive integers. For the purpose of discussion, the resource providers 140-1, ..., 140-N and the contents 115-1, ..., 115-M will be collectively or individually referred to as the resource provider(s) 140 and the content(s) 115. The resource providers 140-1, ..., 140-N may have resource lists 145-1, ..., 145-N. Each of the resource providers 140-1, ..., 140-N may generate one or more contents related to a resource in its resource list and request the content delivery system 110 to deliver the one or more contents to on a plurality of terminal devices 160-1, 160-2, ..., 160-K (collectively or individually referred to as the terminal device(s) 160 for discussion) for display in the application 120. K represents a positive integer. Users of the application 120 may access the contents 115-1, ..., 115-M via the terminal devices 160. The resource providers 140-1, ..., 140-N may generate the contents 115-1, ..., 115-M in a variety of formats, for example, including but not be limited to video, text, image, audio, and advertisement.

It should be understood that the structure and function of each element in the environment 100 is described for illustrative purposes only and does not imply any limitations on the scope of the present disclosure.

As briefly discussed above, optimizing styles of the contents is crucial. In some scenarios, for example, the plurality of contents may include advertisements. The selection of styles of advertisements may include various forms of advertising presentation, such as product cards, call to action (CTA), and the like. The selection of timing for presenting the styles of the advertisements may include when a CTA button appears, the presenting order of advertising elements and the like. The selection of the landing page for the advertisements may refer to the page that users are redirected to after clicking on the advertisements, such as a product detail page, a brand social media page and the like.

Conventional approaches of optimizing the selection of styles of the plurality of contents 115 mainly rely on Exploration-Exploitation (EE), or click-through-rate (CTR), or conversion rate (CVR) based prediction models. Regarding EE, users need to be randomly grouped and presented with different styles of the contents to compare the effectiveness on each group. The problem with this algorithm for traffic exploration is the lack of utilization of user and features of the contents, resulting in poor generalization. The CTR or CVR based prediction models may only predict the click or conversion probability under specific styles of contents and may not quantify the incremental impact of styles of contents on user behavior, and thus these models cannot guide the optimal selection of styles of contents.

Furthermore, the uplift model is an approach for directly modeling the incremental impact of intervention measures (such as different content delivery strategies) on user behavior, which can predict the improvement effect of selection of different styles of contents, different display timing, and different landing pages on user behavior. However, applying the uplift model to the field of selection of style of contents requires addressing challenges in data collection, model training, and real-time application.

Embodiments of the present disclosure propose an improved solution of content delivery. In this solution, a request is received to deliver a target content to a target object. For a content delivery strategy of a plurality of content delivery strategies, at least one group of observed samples are determined based on target features of the target content and the target object. An observed sample comprises reference features of a reference content and a reference object, an indication of whether the content delivery strategy is applied to deliver the reference content to the reference object and an object response of the reference object to the reference content. An effect metric for the content delivery strategy is determined based on the at least one group of observed samples. The effect metric indicates an impact degree of the content delivery strategy to object responses. A target content delivery strategy for delivering the target content to the target object is selected from the plurality of content delivery strategies based on respective effect metrics determined for the plurality of content delivery strategies.

According to these embodiments, by determining the effect metric for different content delivery strategies, the impact of different content delivery strategies on the target object may be modeled. In this way, a refined and personalized content delivery strategy may be selected for a certain target object.

Example embodiments are now described in detail.

In example embodiments of the present disclosure, an object may refer to any suitable type of entities, for example, an organization, an enterprise, or a user. To deliver a content to objects, one or more content delivery strategies may be used. A content delivery strategy may define or specify any suitable aspects of delivering a content. In some embodiments, a content delivery strategy may include a content presentation pattern. In some examples, the content presentation pattern of a content may include a static image of the content, a dynamic video of the content, an interactive content, and the like.

Alternatively, or in addition, the content delivery strategy may include a content presentation timing. In some examples, the content presentation timing of a content may be related to the time when the CTA button appears. For example, the content may be presented immediately when the CTA button appears, or the content may be presented several seconds (e.g., two seconds) after the CTA button appears.

Alternatively, or in addition, the content delivery strategy may include a page to be presented in response to a content interaction. The page may also be referred to as a landing page that objects are redirected to after clicking on the contents. In some examples, if the content is a product in an advertisement, the page may include a product detail page (PDP), brand social media homepage and the like.

FIG. 2 illustrates a schematic diagram of an example process 200 for content delivery in accordance with some embodiments of the present disclosure. As shown in FIG. 2, at block 202, at least a portion (e.g., 20%) of the traffic may be used to collect at least one group of observed samples. In some examples, an observed sample may be constructed by recording the content delivery strategy of a content received by each object (also referred to as a process variable) and an object response (also referred to as a response variable) to the content delivery strategy. In some examples, the plurality of observed samples may be used to train machine learning techniques, such as a causal forest which includes a plurality of causal trees.

In some embodiments, the observed sample may include reference features of a reference content and a reference object. In some examples, the reference features of the reference content (e.g., an advertisement) may include content of the advertisement, the type of the advertisement, historical effects and the like. The reference features of the reference object may include historical behavioral data, one or more properties of the reference object, and the like.

In some embodiments, the observed sample may further include an indication of whether the content delivery strategy is applied to deliver the reference content to the reference object and an object response of the reference object to the reference content.

Alternatively, or in addition, the observed sample may include context features, such as access time, device type, network environment, current session information and the like.

At block 204, the causal forest may be trained by constructing a plurality of causal trees. In some embodiments, a group of observed samples of the at least one group of observed samples may be determined based on a causal tree for the content delivery strategy. During the process of constructing the causal tree, for a first node (also referred to as a current node) in the causal tree, a target feature dimension and a threshold feature in the target feature dimension may be determined from a plurality of candidate feature dimensions by maximizing a splitting gain. In some examples, the target feature dimension and the threshold feature (also referred to as a splitting point) that can maximize the difference in processing effects (also referred to as splitting gain) to capture the heterogeneity of processing effects.

After the target feature dimension and the threshold feature are determined, observed samples in the first node may be allocated to a second node and a third node by comparing respective features of the observed samples in the target feature dimensions and the threshold feature, where the second and third nodes are child nodes of the first node. In some examples, observed samples in the first node are denoted as S, the process variable is denoted as T (with a value of 0 or 1) and the response variable is denoted as Y. For the target feature dimension (denoted as X) and the threshold feature (denoted as x), S may be divided into a left subset *S_{L}* (e.g., observed samples in the second node) and a right subset *S_{R}* (e.g., observed samples in the third node), where *S_{L} =* {i ∈ *S*|*Xᵢ* ≤ *x*} and *S_{R} =* {i ∈ *S*|*Xᵢ > x*}*.* As can be seen from the above equation, if features of the observed samples in the target feature dimensions are less than or equal to the threshold feature, the observed samples may be allocated to the left subset. Otherwise, the observed samples may be allocated to the right subset.

In some embodiments, the splitting gain may be determined by comparing a difference between average treatment effect (ATE) of the left subset and ATE of the right subset. In some examples, ATE of the left subset may be determined as follows: ${\hat{τ}}_{L} = \frac{1}{\left|{S}_{L}\right|} {\sum }_{i ∈ {S}_{L}} \left({Y}_{i}\left|{T}_{i}=1\right.\right) - \frac{1}{\left|{S}_{L}\right|} {\sum }_{i ∈ {S}_{L}} \left({Y}_{i}\left|{T}_{i}=0\right.\right)$, where *Yᵢ* represents the response variable (e.g., click, conversion, etc.) and *Tᵢ* represents the process variable (e.g., *Tᵢ* = 1 indicates the content delivery strategy is applied and *Tᵢ* = 0 indicates the content delivery strategy is not applied). Similarly, ATE of the right subset may be determined as follows: ${\hat{τ}}_{R} = \frac{1}{\left|{S}_{R}\right|} {\sum }_{i ∈ {S}_{R}} \left({Y}_{i}\left|{T}_{i}=1\right.\right) - \frac{1}{\left|{S}_{R}\right|} {\sum }_{i ∈ {S}_{R}} \left({Y}_{i}\left|{T}_{i}=0\right.\right)$ . The splitting gain may be determined as follows: *Δ =* (*τ̂_{L} - τ̂_{R}*)²*.*

In some embodiments, the causal tree may be one of a plurality of causal trees for the content delivery strategy, and each causal tree of the plurality of causal trees is constructed based on a plurality of observed samples selected from an observed sample set. In some examples, a plurality of subsamples may be extracted from original data (e.g., the at least one group of observed samples) and the plurality of subsamples may be used to construct a plurality of causal trees, to form a causal forest.

After the causal forest is constructed, the causal forest may be used to determine a target content delivery strategy for delivering a target content to a target object. At block 206, a request to deliver a target content to a target object may be received. At block 208, request data (e.g., new observed samples including a target content to a target object) related to the request may be transformed to a format needed by the causal forest. At block 210, data with a specified format may be input to the causal forest to determine the target content delivery strategy for delivering the target content to the target object.

In some embodiments, for a content delivery strategy of a plurality of content delivery strategies, at least one group of observed samples may be determined based on target features of the target content and the target object. In some examples, a group of observed samples corresponds to a leaf node in a causal tree in the forest. For new observed samples, respective trees in the causal forest may be used to estimate their response values under different treatments and treatment effects.

In some embodiments, a causal tree constructed for the content delivery strategy may be obtained. An internal node in the causal tree may be split according to a feature dimension (any property of the content or the object). The causal tree may be searched by comparing the target features with one or more internal nodes in the causal tree, until a leaf node is reached. Then, a group of observed samples corresponding to the reached leaf node may be determined as one of the at least one group of observed samples. In some examples, based on the target features, the search may be started from a root node in the causal tree and along the splitting path of the causal tree. Layer by layer search in the causal tree may be performed until reaching a certain leaf node.

After the at least one group of observed samples are determined, an effect metric (e.g., ATE) for the content delivery strategy may be determined based on the at least one group of observed samples. The effect metric may indicate an impact degree of the content delivery strategy to object responses. In this way, by determining the leaf nodes to which the observed samples belong and estimating individualized processing effects based on the average processing effect within the leaf nodes, the target object may be provided with a more refined selection of styles of the content.

In some embodiments, the at least one group of observed samples may include a plurality of groups of observed samples. For a group of observed samples in the plurality of groups of observed samples, a group effect metric indicating an impact degree of the content delivery strategy to objects in the group of observed samples may be determined. In some examples, respective ATE (as an example of the group effect metric) may be determined for respective groups of observed samples corresponding to respective leaf nodes in the causal tree.

In some embodiments, a first subgroup of observed samples with the content delivery strategy applied and a second subgroup of observed samples without the content deliver strategy applied may be determined. The group effect metric may be determined based on object responses in the first subgroup of observed samples and object responses in the second subgroup of observed samples. In some examples, the group effect metric may be determined as follows: *τ̂* = *Ŷₜᵣₑₐₜ* - *Y̌_{control}* , where *Ŷₜᵣₑₐₜ* represents object responses in the first subgroup of observed samples and *Ŷ_{control}* represents object responses in the second subgroup of observed samples. In this way, the causal forest model can effectively distinguish incremental impacts of different content delivery strategies on the behavior of the object and is suitable to optimize the selection of styles of a content in high-dimensional feature spaces.

After respective group effect metrics determined for the plurality of groups of observed samples are determined, the effect metric for the content delivery strategy may be determined based on the respective group effect metrics. In an example, the effect metric may be an average of the respective group effect metrics.

After the effect metric is determined, a target content delivery strategy for delivering the target content to the target object may be selected from the plurality of content delivery strategies based on respective effect metrics determined for the plurality of content delivery strategies. In an example, a target content delivery strategy with the maximum effect metric may be determined from the plurality of content delivery strategies. With these embodiments, by accurately estimating personalized processing effects, personalized optimization of styles of a content can be achieved, thereby improving click through rates and conversion rates of the target object. In this way, target objects are provided with contents with styles that that better match their interests and needs, and thus the experience of target objects is improved and interactive effects of the content is improved.

In some embodiments, a plurality of causal trees may be constructed for the content delivery strategy, and each group of the plurality of groups of observed samples corresponds to a leaf node in a causal tree of the plurality of causal trees. In this way, the accuracy of effect metric for the content delivery strategy may be improved by considering the effect metric for the plurality of causal trees.

In some embodiments, area under the uplift curve (AUUC), Qini coefficient and other metrics may be used to measure the incremental effects caused by the target content delivery strategy which is selected through the plurality of causal trees (also referred to as the causal forest). Furthermore, generalization ability and stability of the plurality of causal trees may be evaluated through metrics such as cross validation.

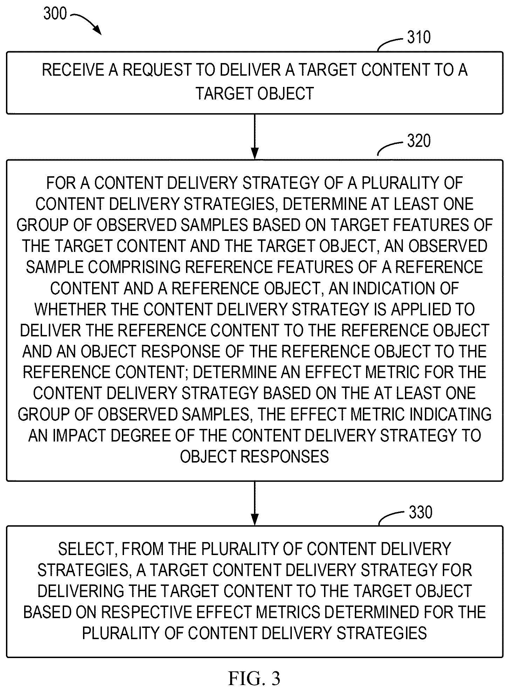

FIG. 3 illustrates a flowchart of a process 300 for content delivery in accordance with some embodiments of the present disclosure. The process 300 may be implemented at the content delivery system 110 of FIG. 1.

At block 310, the content delivery system 110 receives a request to deliver a target content to a target object.

At block 320, the content delivery system 110, for a content delivery strategy of a plurality of content delivery strategies, determines at least one group of observed samples based on target features of the target content and the target object, an observed sample comprising reference features of a reference content and a reference object, an indication of whether the content delivery strategy is applied to deliver the reference content to the reference object and an object response of the reference object to the reference content; determines an effect metric for the content delivery strategy based on the at least one group of observed samples, the effect metric indicating an impact degree of the content delivery strategy to object responses.

At block 330, the content delivery system 110 selects, from the plurality of content delivery strategies, a target content delivery strategy for delivering the target content to the target object based on respective effect metrics determined for the plurality of content delivery strategies.

In some embodiments, the at least one group of observed samples comprises a plurality of groups of observed samples, and determining the effect metric for the content delivery strategy comprises: for a group of observed samples in the plurality of groups of observed samples, determining a group effect metric indicating an impact degree of the content delivery strategy to objects in the group of observed samples; and determining the effect metric for the content delivery strategy based on respective group effect metrics determined for the plurality of groups of observed samples.

In some embodiments, a plurality of causal trees is constructed for the content delivery strategy, and each group of the plurality of groups of observed samples corresponds to a leaf node in a causal tree of the plurality of causal trees.

In some embodiments, determining the group effect metric comprises: determining, from the group of observed samples, a first subgroup of observed samples with the content delivery strategy applied and a second subgroup of observed samples without the content deliver strategy applied; and determining the group effect metric based on object responses in the first subgroup of observed samples and object responses in the second subgroup of observed samples.

In some embodiments, determining the at least one group of observed samples comprises: obtaining a causal tree constructed for the content delivery strategy, an internal node in the causal tree being split according to a feature dimension; searching, by comparing the target features with one or more internal nodes in the causal tree, the causal tree until a leaf node is reached; and determining a group of observed samples corresponding to the reached leaf node as one of the at least one group of observed samples.

In some embodiments, a group of observed samples of the at least one group of observed samples is determined based on a causal tree for the content delivery strategy, and the causal tree is constructed by: for a first node in the causal tree, determining a target feature dimension and a threshold feature in the target feature dimension from a plurality of candidate feature dimensions by maximizing a splitting gain; and allocating observed samples in the first node to a second node and a third node by comparing respective features of the observed samples in the target feature dimensions and the threshold feature, wherein the second and third nodes are child nodes of the first node.

In some embodiments, the causal tree is one of a plurality of causal trees for the content delivery strategy, and each causal tree of the plurality of causal trees is constructed based on a plurality of observed samples selected from an observed sample set.

In some embodiments, the content delivery strategy comprises at least one of: a content presentation pattern, a content presentation timing, or a page to be presented in response to a content interaction.

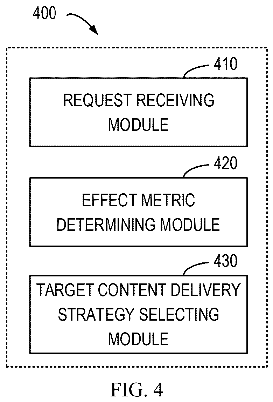

FIG. 4 shows a block diagram of an apparatus 400 for content delivery in accordance with some embodiments of the present disclosure. The apparatus 400 may be implemented, for example, or included at the content delivery system 110 of FIG. 1. Various modules/components in the apparatus 400 may be implemented by hardware, software, firmware, or any combination thereof.

As shown, the apparatus 400 includes a request receiving module 410 configured to receive a request to deliver a target content to a target object.

The apparatus 400 further includes an effect metric determining module 420 configured to, for a content delivery strategy of a plurality of content delivery strategies, determine at least one group of observed samples based on target features of the target content and the target object, an observed sample comprising reference features of a reference content and a reference object, an indication of whether the content delivery strategy is applied to deliver the reference content to the reference object and an object response of the reference object to the reference content; and determine an effect metric for the content delivery strategy based on the at least one group of observed samples, the effect metric indicating an impact degree of the content delivery strategy to object responses.

The apparatus 400 further includes a target content delivery strategy selecting module 430 configured to select, from the plurality of content delivery strategies, a target content delivery strategy for delivering the target content to the target object based on respective effect metrics determined for the plurality of content delivery strategies.

In some embodiments, the at least one group of observed samples comprises a plurality of groups of observed samples. The effect metric determining module 420 is further configured to for a group of observed samples in the plurality of groups of observed samples, determine a group effect metric indicating an impact degree of the content delivery strategy to objects in the group of observed samples; and determine the effect metric for the content delivery strategy based on respective group effect metrics determined for the plurality of groups of observed samples.

In some embodiments, a plurality of causal trees is constructed for the content delivery strategy, and each group of the plurality of groups of observed samples corresponds to a leaf node in a causal tree of the plurality of causal trees.

In some embodiments, the effect metric determining module 420 is further configured to determine, from the group of observed samples, a first subgroup of observed samples with the content delivery strategy applied and a second subgroup of observed samples without the content deliver strategy applied; and determine the group effect metric based on object responses in the first subgroup of observed samples and object responses in the second subgroup of observed samples.

In some embodiments, the effect metric determining module 420 is further configured to obtain a causal tree constructed for the content delivery strategy, an internal node in the causal tree being split according to a feature dimension; search, by comparing the target features with one or more internal nodes in the causal tree, the causal tree until a leaf node is reached; and determine a group of observed samples corresponding to the reached leaf node as one of the at least one group of observed samples.

In some embodiments, a group of observed samples of the at least one group of observed samples is determined based on a causal tree for the content delivery strategy, and the causal tree is constructed by: for a first node in the causal tree, determining a target feature dimension and a threshold feature in the target feature dimension from a plurality of candidate feature dimensions by maximizing a splitting gain; and allocating observed samples in the first node to a second node and a third node by comparing respective features of the observed samples in the target feature dimensions and the threshold feature, wherein the second and third nodes are child nodes of the first node.

In some embodiments, the causal tree is one of a plurality of causal trees for the content delivery strategy, and each causal tree of the plurality of causal trees is constructed based on a plurality of observed samples selected from an observed sample set.

In some embodiments, the content delivery strategy comprises at least one of: a content presentation pattern, a content presentation timing, or a page to be presented in response to a content interaction.

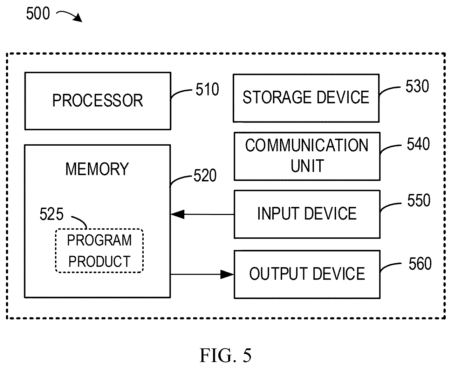

FIG. 5 illustrates a block diagram of an electronic device 500 in which one or more embodiments of the present disclosure can be implemented. It would be appreciated that the electronic device 500 shown in FIG. 5 is only an example and should not constitute any restriction on the function and scope of the embodiments described herein.

As shown in FIG. 5, the electronic device 500 is in the form of a general computing device. The components of the electronic device 500 may include, but are not limited to, at least one processor 510 or processing units, a memory 520, a storage device 530, one or more communication units 540, one or more input devices 550, and one or more output devices 560. The processor 510 may be an actual or virtual processor and can execute various processes according to the programs stored in the memory 520. In a multiprocessor system, multiple processors execute computer executable instructions in parallel to improve the parallel processing capability of the electronic device 500.

The electronic device 500 typically includes a variety of computer storage medium. Such medium may be any available medium that is accessible to the electronic device 500, including but not limited to volatile and non-volatile medium, removable and non-removable medium. The memory 520 may be volatile memory (for example, a register, cache, a random access memory (RAM)), a non-volatile memory (for example, a read-only memory (ROM), an electrically erasable programmable read-only memory (EEPROM), a flash memory) or any combination thereof. The storage device 530 may be any removable or non-removable medium, and may include a machine-readable medium, such as a flash drive, a disk, or any other medium, which can be used to store information and/or data (such as training data for training) and can be accessed within the electronic device 500.

The electronic device 500 may further include additional removable/non-removable, volatile/non-volatile, transitory/non-transitory storage medium. Although not shown in FIG. 5, a disk driver for reading from or writing to a removable, non-volatile disk (such as a "floppy disk"), and an optical disk driver for reading from or writing to a removable, non-volatile optical disk can be provided. In these cases, each driver may be connected to the bus (not shown) by one or more data medium interfaces. The memory 520 may include a computer program product 525, which has one or more program modules configured to perform various methods or acts of various embodiments of the present disclosure.

The communication unit 540 communicates with a further computing device through the communication medium. In addition, functions of components in the electronic device 500 may be implemented by a single computing cluster or multiple computing machines, which can communicate through a communication connection. Therefore, the electronic device 500 may be operated in a networking environment using a logical connection with one or more other servers, a network personal computer (PC), or another network node.

The input device 550 may be one or more input devices, such as a mouse, a keyboard, a trackball, etc. The output device 560 may be one or more output devices, such as a display, a speaker, a printer, etc. The electronic device 500 may also communicate with one or more external devices (not shown) through the communication unit 540 as required. The external device, such as a storage device, a display device, etc., communicate with one or more devices that enable users to interact with the electronic device 500, or communicate with any device (for example, a network card, a modem, etc.) that makes the electronic device 500 communicate with one or more other computing devices. Such communication may be executed via an input/output (I/O) interface (not shown).

According to example implementation of the present disclosure, a computer-readable storage medium is provided, on which a computer-executable instruction or computer program is stored, where the computer-executable instructions or the computer program is executed by the processor to implement the method described above. According to example implementation of the present disclosure, a computer program product is also provided. The computer program product is physically stored on a non-transient computer-readable medium and includes computer-executable instructions, which are executed by the processor to implement the method described above.

Various aspects of the present disclosure are described herein with reference to the flow chart and/or the block diagram of the method, the device, the equipment and the computer program product implemented in accordance with the present disclosure. It would be appreciated that each block of the flowchart and/or the block diagram and the combination of each block in the flowchart and/or the block diagram may be implemented by computer-readable program instructions.

These computer-readable program instructions may be provided to the processors of general-purpose computers, special computers or other programmable data processing devices to produce a machine that generates a device to implement the functions/acts specified in one or more blocks in the flow chart and/or the block diagram when these instructions are executed through the processors of the computer or other programmable data processing devices. These computer-readable program instructions may also be stored in a computer-readable storage medium. These instructions enable a computer, a programmable data processing device and/or other devices to work in a specific way. Therefore, the computer-readable medium containing the instructions includes a product, which includes instructions to implement various aspects of the functions/acts specified in one or more blocks in the flowchart and/or the block diagram.

The computer-readable program instructions may be loaded onto a computer, other programmable data processing apparatus, or other devices, so that a series of operational steps can be performed on a computer, other programmable data processing apparatus, or other devices, to generate a computer-implemented process, such that the instructions which execute on a computer, other programmable data processing apparatus, or other devices implement the functions/acts specified in one or more blocks in the flowchart and/or the block diagram.

The flowchart and the block diagram in the drawings show the possible architecture, functions and operations of the system, the method and the computer program product implemented in accordance with the present disclosure. In this regard, each block in the flowchart or the block diagram may represent a part of a module, a program segment or instructions, which contains one or more executable instructions for implementing the specified logic function. In some alternative implementations, the functions marked in the block may also occur in a different order from those marked in the drawings. For example, two consecutive blocks may actually be executed in parallel, and sometimes can also be executed in a reverse order, depending on the function involved. It should also be noted that each block in the block diagram and/or the flowchart, and combinations of blocks in the block diagram and/or the flowchart, may be implemented by a dedicated hardware-based system that performs the specified functions or acts, or by the combination of dedicated hardware and computer instructions.

Each implementation of the present disclosure has been described above. The above description is example, not exhaustive, and is not limited to the disclosed implementations. Without departing from the scope and spirit of the described implementations, many modifications and changes are obvious to ordinary skill in the art. The selection of terms used in this article aims to best explain the principles, practical application or improvement of technology in the market of each implementation, or to enable other ordinary skill in the art to understand the various embodiments disclosed herein.

## Claims

1. A method (300) for content delivery, comprising:
receiving (310) a request to deliver a target content to a target object;
for a content delivery strategy of a plurality of content delivery strategies,
determining (320) at least one group of observed samples based on target features of the target content and the target object, an observed sample comprising reference features of a reference content and a reference object, an indication of whether the content delivery strategy is applied to deliver the reference content to the reference object and an object response of the reference object to the reference content;
determining an effect metric for the content delivery strategy based on the at least one group of observed samples, the effect metric indicating an impact degree of the content delivery strategy to object responses; and
selecting (330), from the plurality of content delivery strategies, a target content delivery strategy for delivering the target content to the target object based on respective effect metrics determined for the plurality of content delivery strategies.

2. The method (300) of claim 1, wherein the at least one group of observed samples comprises a plurality of groups of observed samples, and determining the effect metric for the content delivery strategy comprises:
for a group of observed samples in the plurality of groups of observed samples,
determining a group effect metric indicating an impact degree of the content delivery strategy to objects in the group of observed samples; and
determining the effect metric for the content delivery strategy based on respective group effect metrics determined for the plurality of groups of observed samples.

3. The method (300) of claim 2, wherein a plurality of causal trees is constructed for the content delivery strategy, and each group of the plurality of groups of observed samples corresponds to a leaf node in a causal tree of the plurality of causal trees.

4. The method (300) of claim 2, wherein determining the group effect metric comprises:
determining, from the group of observed samples, a first subgroup of observed samples with the content delivery strategy applied and a second subgroup of observed samples without the content deliver strategy applied; and
determining the group effect metric based on object responses in the first subgroup of observed samples and object responses in the second subgroup of observed samples.

5. The method (300) of claim 1, wherein determining the at least one group of observed samples comprises:
obtaining a causal tree constructed for the content delivery strategy, an internal node in the causal tree being split according to a feature dimension;
searching, by comparing the target features with one or more internal nodes in the causal tree, the causal tree until a leaf node is reached; and
determining a group of observed samples corresponding to the reached leaf node as one of the at least one group of observed samples.

6. The method (300) of claim 1, wherein a group of observed samples of the at least one group of observed samples is determined based on a causal tree for the content delivery strategy, and the causal tree is constructed by:
for a first node in the causal tree,
determining a target feature dimension and a threshold feature in the target feature dimension from a plurality of candidate feature dimensions by maximizing a splitting gain; and
allocating observed samples in the first node to a second node and a third node by comparing respective features of the observed samples in the target feature dimensions and the threshold feature, wherein the second and third nodes are child nodes of the first node.

7. The method (300) of claim 6, wherein the causal tree is one of a plurality of causal trees for the content delivery strategy, and each causal tree of the plurality of causal trees is constructed based on a plurality of observed samples selected from an observed sample set.

8. The method (300) of claim 1, wherein the content delivery strategy comprises at least one of:
a content presentation pattern,
a content presentation timing, or
a page to be presented in response to a content interaction.

9. An apparatus (400) for content delivery, comprising:
a request receiving module (410) configured to receive a request to deliver a target content to a target object.
an effect metric determining module (420) configured to, for a content delivery strategy of a plurality of content delivery strategies, determine at least one group of observed samples based on target features of the target content and the target object, an observed sample comprising reference features of a reference content and a reference object, an indication of whether the content delivery strategy is applied to deliver the reference content to the reference object and an object response of the reference object to the reference content; and determine an effect metric for the content delivery strategy based on the at least one group of observed samples, the effect metric indicating an impact degree of the content delivery strategy to object responses; and
a target content delivery strategy selecting module (430) configured to select, from the plurality of content delivery strategies, a target content delivery strategy for delivering the target content to the target object based on respective effect metrics determined for the plurality of content delivery strategies.

10. The apparatus (400) of claim 9, wherein the at least one group of observed samples comprises a plurality of groups of observed samples, and the effect metric determining module (420) is further configured to:
for a group of observed samples in the plurality of groups of observed samples,
determine a group effect metric indicating an impact degree of the content delivery strategy to objects in the group of observed samples; and
determine the effect metric for the content delivery strategy based on respective group effect metrics determined for the plurality of groups of observed samples.

11. The apparatus (400) of claim 10, wherein a plurality of causal trees is constructed for the content delivery strategy, and each group of the plurality of groups of observed samples corresponds to a leaf node in a causal tree of the plurality of causal trees.

12. The apparatus (400) of claim 10, wherein the effect metric determining module (420) is further configured to:
determine, from the group of observed samples, a first subgroup of observed samples with the content delivery strategy applied and a second subgroup of observed samples without the content deliver strategy applied; and
determine the group effect metric based on object responses in the first subgroup of observed samples and object responses in the second subgroup of observed samples.

13. The apparatus (400) of claim 9, wherein the effect metric determining module (420) is further configured to:
obtain a causal tree constructed for the content delivery strategy, an internal node in the causal tree being split according to a feature dimension;
search, by comparing the target features with one or more internal nodes in the causal tree, the causal tree until a leaf node is reached; and
determine a group of observed samples corresponding to the reached leaf node as one of the at least one group of observed samples.

14. An electronic device, comprising:
at least one processor; and
at least one memory coupled to the at least one processor and storing instructions executable by the at least one processor, the instructions, upon execution by the at least one processor, causing the electronic device to perform a method for content delivery according to any of claims 1 to 8.

15. A computer readable storage medium having computer executable instructions stored thereon, the computer executable instructions, when executed by an electronic device, causing the electronic device to perform a method for content delivery according to any of claims 1 to 8.
